# FASCICULE DE BREVET EUROPEEN

(11) **EP 3 697 840 B1**
(45) Date de publication et mention de la délivrance du brevet: **01.12.2021**
(21) Numéro de dépôt: 18808419.8
(22) Date de dépôt: 17.10.2018
(51) Int. Cl.: C08L 9/00, B60C 1/00, C08L 9/06

(54) **COMPOSITION DE CAOUTCHOUC COMPRENANT UNE RESINE DE POLYPHENYLENE ETHER COMME PLASTIFIANT**
KAUTSCHUKZUSAMMENSETZUNG ENTHALTEND EIN POLYPHENYLENETHER-HARZ ALS WEICHMACHER
RUBBER COMPOSITION COMPRISING A POLYPHENYLENE ETHER RESIN AS PLASTIZICER

(30) Priorité: 20.10.2017 FR 1759919
(43) Date de publication de la demande: 26.08.2020
(73) Titulaire: Compagnie Générale des Etablissements Michelin, 63000 Clermont-Ferrand (FR)
(72) Inventeur: ABAD, Mathilde, 63040 Clermont-Ferrand Cedex 9 (FR); PAGANO, Salvatore, 63040 Clermont-Ferrand Cedex 9 (FR)
(74) Mandataire: Sidhu, Alban
(86) Numéro de dépôt international: PCT/FR2018/052585
(87) Numéro de publication internationale: WO 2019/077272

(56) Documents cités:
- EP-A1- 2 821 251
- WO-A1-2015/091918

## Description

La présente invention est relative aux compositions de caoutchouc destinées notamment à la fabrication de pneumatiques ou de produits semi-finis pour pneumatiques, en particulier des compositions de caoutchouc pour bandes de roulement de pneumatique présentant une grande facilité de fabrication des mélanges et une bonne résistance à l'usure en pneumatique.

Les pneumatiques sont soumis à de nombreuses sollicitations lors de leur usage. Les bandes de roulement de pneumatique notamment, doivent obéir à un grand nombre d'exigences techniques, souvent antinomiques, parmi lesquelles une résistance élevée à l'usure, une bonne adhérence, sur route sèche comme sur route mouillée. Les mélanges pour ces pneumatiques doivent aussi présenter une bonne processabilité, c'est-à-dire qu'ils doivent être faciles à fabriquer.

Il est connu d'utiliser dans les compositions de pneumatique des élastomères, combinés à des charges renforçantes, et à des agents plastifiants. Classiquement, ces agents plastifiants peuvent être des huiles plastifiantes ou des résines plastifiantes, telles que décrites dans de nombreux documents, par exemple dans les demandes de brevet FR 2866028, FR 2877348 ou FR 2889538, décrivant notamment l'utilisation de résines thermoplastiques comme résines plastifiantes.

Par ailleurs, la demanderesse a décrit dans le document WO2015/091921 une composition de caoutchouc à base d'au moins un élastomère diénique vinylaromatique majoritaire, une charge renforçante, un système de réticulation, une résine thermoplastique comprenant des motifs polyphénylène éther éventuellement substitués, ladite résine présentant une masse moléculaire moyenne en nombre (Mn) inférieure à 6000 g/mol. Les exemples proposent des résines présentées avec une Mn de 2350 g/mol et de 1800 g/mol par exemple. Ce document indique que l'utilisation d'une telle résine permet de façon surprenante d'améliorer le compromis de performance entre la facilité de fabrication des mélanges et l'adhérence des pneumatiques. De plus, l'utilisation de ces résines thermoplastiques à base de motifs polyphénylène éther éventuellement substitués permet de diminuer la quantité de résine par rapport aux résines thermoplastiques plastifiantes classiques, ce qui permet d'avoir une diminution du collant à cru des compositions lié à l'utilisation de ces résines et donc de faciliter la fabrication des pneumatiques comprenant ces compositions.

A présent, la demanderesse a découvert qu'une sélection particulière parmi les résines comprenant des motifs polyphénylène éther connues permettait de décaler davantage la transition vitreuse du mélange et par conséquent de diminuer la quantité de résine thermoplastique classique contenue dans le mélange.

En conséquence, un premier objet de l'invention concerne une composition de caoutchouc à base d'au moins un élastomère diénique vinylaromatique majoritaire, une charge renforçante, un système de réticulation, une résine polyphénylène éther présentant une masse moléculaire moyenne en nombre (Mn) comprise dans un domaine allant de 800 à 1500 g/mol et de formule générale (I) 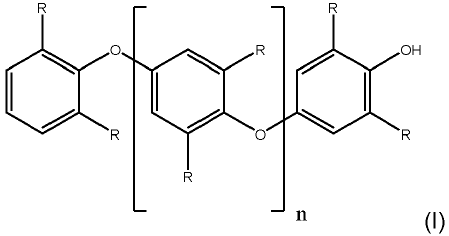 dans laquelle les groupements R représentent indépendamment les uns des autres un atome d'hydrogène ou un radical alkyle, et n est compris entre 6 et 12.

De préférence, l'invention concerne une composition telle que définie ci-dessus, dans laquelle ladite résine présente une masse moléculaire moyenne en nombre (Mn) comprise dans un domaine allant de 800 à 1300 g/mol, plus préférentiellement comprise dans un domaine allant de 800 à 1100 g/mol.

Préférentiellement, l'invention concerne une composition telle que définie ci-dessus, dans laquelle l'élastomère diénique vinylaromatique présente un taux de vinylaromatique supérieur à 10%, de préférence compris entre 10% et 50%, plus préférentiellement entre 10% et 30%, de manière très préférentielle entre 12 et 28% et de manière encore plus préférentielle entre 14 et 20%.

Préférentiellement, l'élastomère diénique vinylaromatique est choisi dans le groupe constitué par les copolymères de butadiène et de styrène, les copolymères d'isoprène et de styrène, les copolymères de butadiène, d'isoprène et de styrène et les mélanges de ces élastomères, et de préférence dans le groupe constitué par les copolymères de butadiène et de styrène et le mélanges de ces derniers. De préférence également, le taux d'élastomère diénique vinylaromatique est compris dans un domaine allant de 70 à 100 pce (parties en poids pour cent parties d'élastomère), et plus préférentiellement, de 85 à 100 pce.

De préférence, l'invention concerne une composition telle que définie ci-dessus, dans laquelle la résine polyphénylène éther présente une température de transition vitreuse (Tg), mesurée par DSC selon la norme ASTM D3418 de 1999, comprise dans un domaine allant de 0 à 130°C, de préférence, de 5 à 115°C et plus préférentiellement, de 5 à 100°C.

De préférence, l'invention concerne une composition telle que définie ci-dessus, dans laquelle la résine polyphénylène éther présente la formule générale (I) dans laquelle les groupements R représentent tous un atome d'hydrogène ou tous un radical alkyle identique.

Préférentiellement, l'invention concerne une composition telle que définie ci-dessus, dans laquelle les groupements R représentent un radical méthyle.

De préférence, l'invention concerne une composition telle que définie ci-dessus, dans laquelle n est compris entre 7 et 10.

De préférence, l'invention concerne une composition telle que définie ci-dessus, dans laquelle le taux de ladite résine polyphénylène éther est compris dans un domaine allant de 1 à 90 pce, de préférence de 2 à 80 pce, plus préférentiellement, de 3 à 60 pce, mieux de 5 à 60 pce.

De manière préférentielle, l'invention concerne une composition telle que définie ci-dessus, dans laquelle la charge renforçante comporte du noir de carbone et/ou de la silice.

De manière préférentielle également, l'invention concerne une composition telle que définie ci-dessus, dans laquelle la charge renforçante représente entre 20 et 200 pce, plus préférentiellement entre 30 et 160 pce.

De préférence, l'invention concerne une composition telle que définie ci-dessus, dans laquelle la charge renforçante comporte majoritairement du noir de carbone. Préférentiellement, le noir de carbone représente de 60 à 160 pce, de préférence de 70 à 150 pce.

Alternativement et de préférence également, l'invention concerne une composition telle que définie ci-dessus, dans laquelle la charge renforçante comporte majoritairement de la silice. Préférentiellement, la silice représente de 60 à 160 pce, de préférence de 70 à 150 pce.

L'invention a également pour objet les articles en caoutchouc finis ou semi-finis comportant une composition de caoutchouc conforme à l'invention.

L'invention a également pour objet les pneumatiques comportant une composition de caoutchouc conforme à l'invention, et notamment les pneumatiques dans lesquels la bande de roulement comporte une composition de caoutchouc selon l'invention.

Les pneumatiques conformes à l'invention sont notamment destinés à des véhicules tourisme comme à des véhicules deux roues (moto, vélo), véhicules industriels choisis parmi camionnettes, "Poids-lourd" - i.e., métro, bus, engins de transport routier (camions, tracteurs, remorques), véhicules hors-la-route, engins agricoles ou de génie civil, avions, autres véhicules de transport ou de manutention.

L'invention ainsi que ses avantages seront aisément compris à la lumière de la description et des exemples de réalisation qui suivent.

### I. Tests

### 1.1. Propriétés dynamiques après cuisson

les compositions de caoutchouc sont caractérisées après cuisson, comme indiqué ci-après.

Les propriétés dynamiques G* sont mesurées sur un viscoanalyseur (Metravib VA4000), selon la norme ASTM D 5992-96. On enregistre la réponse d'un échantillon de composition vulcanisée (c'est dire cuit jusqu'à un taux de conversion d'au moins 90%) (éprouvette cylindrique de 2 mm d'épaisseur et de 78,5 mm² de section), soumis à une sollicitation sinusoïdale en cisaillement simple alterne, a la fréquence de 10 Hz.

On effectue un balayage en température à vitesse de montée en température constante de +1.5°C/min à contrainte de cisaillement crête-crête imposée de 0,7MPa. L'éprouvette est sollicitée en cisaillement sinusoïdal à 10 Hz, symétriquement autour de sa position d'équilibre. Les résultats exploités sont le module complexe de cisaillement dynamique (G*), la partie visqueuse du module de cisaillement (G"), notée G"(T).

La température de transition vitreuse (notée Tg) selon l'invention correspond à la température à laquelle on observe le maximum observé de G" lors du balayage en température. Ainsi, dans la présente description, sauf indication expresse différente, la Tg est définie comme la température à laquelle on observe le maximum de G" (G" représentant de manière connue la partie visqueuse du module de cisaillement), lors du balayage en température d'un échantillon réticulé soumis à une sollicitation sinusoïdale à contrainte imposée de 0,7 MPa et à une fréquence de 10 Hz. Comme indiqué précédemment, cette Tg est mesurée lors de la mesure des propriétés dynamiques, sur un viscoanalyseur (Metravib VA4000), selon la norme ASTM D 5992-96.

### 1.2. Mesure de la masse moléculaire (GPC)

La masse moléculaire des résines PPE est mesurée comme indiqué ci-après.

La technique SEC (Size Exclusion Chromatography) permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de MOORE.

Il n'y a pas de traitement particulier de l'échantillon de polymère avant analyse. Celui-ci est simplement solubilisé dans le solvant d'élution à une concentration d'environ 1 g/L. Puis la solution est filtrée sur filtre de porosité 0,45µm avant injection.

L'appareillage utilisé est une chaîne chromatographique "WATERS alliance". Le solvant d'élution est le tétrahydrofurane sans antioxydant, le débit est de 1 mL.min-1, la température du système de 35°C et la durée d'analyse de 45 min. Les colonnes utilisées sont un jeu de quatre colonnes AGILENT de dénomination commerciale deux "PL GEL MIXED D" et deux "PL GEL MIXED E". Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée à partir de polystyrènes étalon.

### II. Conditions de réalisation de l'invention

La composition de caoutchouc selon l'invention est à base d'au moins un élastomère diénique vinylaromatique majoritaire, une charge renforçante, un système de réticulation, une résine polyphénylène éther présentant une masse moléculaire moyenne en nombre (Mn) comprise dans un domaine allant de 800 à 1500 g/mol et de formule générale (I) 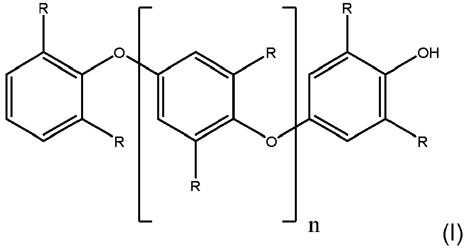 dans laquelle les groupements R représentent indépendamment les uns des autres un atome d'hydrogène ou un radical alkyle, et n est compris entre 6 et 12.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères.

### 11.1. Elastomères

La composition de caoutchouc selon l'invention comprend un élastomère diénique vinylaromatique majoritaire.

Par élastomère ou caoutchouc "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces définitions étant données, on entend plus particulièrement par élastomère diénique vinylaromatique tout copolymère obtenu par copolymérisation d'un ou plusieurs diènes conjugués entre eux ou avec un ou plusieurs composés vinyle aromatique ayant de 8 à 20 atomes de carbone;

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène.

A titre de composés vinylaromatiques conviennent par exemple le styrène, l'alphaméthylstyrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères diéniques vinylaromatiques (tels que SBR) du type époxydés.

De préférence, l'élastomère diénique vinylaromatique de la composition conforme à l'invention possède un taux de vinylaromatique supérieur à 10%, de préférence compris entre 10% et 50%, plus préférentiellement entre 10% et 30%, de manière très préférentielle entre 12% et 28% et de manière encore plus préférentielle entre 14% et 20%. Plus préférentiellement l'élastomère diénique vinylaromatique de la composition conforme à l'invention est un élastomère diénique styrénique (c'est-à-dire que la partie vinylaromatique est une partie styrénique), avec un taux de styrène supérieur à 10%, de préférence compris entre 10% et 50%, plus préférentiellement entre 10% et 30%, de manière très préférentielle entre 12% et 28% et de manière encore plus préférentielle entre 14% et 20%.

De préférence, l'élastomère diénique vinylaromatique de la composition conforme à l'invention est choisi préférentiellement dans le groupe des élastomères diéniques styréniques fortement insaturés constitué par les copolymères styréniques de butadiène, les copolymères styréniques d'isoprène et les mélanges de ces élastomères. De tels copolymères sont plus préférentiellement choisis dans le groupe constitué par les copolymères de butadiène-styrène (SBR), les copolymères d'isoprène-styrène (SIR) et les copolymères d'isoprène-butadiène-styrène (SBIR).

Conviennent notamment, les copolymères de butadiène-styrène (SBR) et en particulier ceux ayant une Tg (température de transition vitreuse) mesurée par DSC selon la norme ASTM D3418 de 1999 comprise entre 20°C et -70°C et plus particulièrement entre 0°C et -50°C, une teneur en styrène supérieure à 10%, de préférence comprise entre 10% et 50%, plus préférentiellement entre 10% et 30%, de manière très préférentielle entre 12% et 28% et de manière encore plus préférentielle entre 14% et 20%, et une teneur (% molaire) en liaisons -1,2 de la partie butadiénique comprise entre 4% et 75%, une teneur (% molaire) en liaisons trans-1,4 comprise entre 10% et 80%.

Conviennent également les copolymères isoprène-styrène (SIR) et notamment ceux ayant une teneur en styrène comprise entre 15% et 60% en poids et plus particulièrement entre 20% et 50% et une Tg, mesurée par DSC selon la norme ASTM D3418 de 1999, comprise entre 25°C et -50°C.

Dans le cas des copolymères de butadiène-styrène-isoprène (SBIR) conviennent notamment ceux ayant une teneur en styrène comprise entre 15% et 50% en poids, plus particulièrement entre 20% et 50%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg, mesurée par DSC selon la norme ASTM D3418 de 1999, comprise entre 20°C et -60°C.

De manière très préférentielle, l'élastomère diénique vinylaromatique de la composition conforme à l'invention est un SBR. De manière connue, le SBR peut être préparé en émulsion ("ESBR") ou préparé en solution ("SSBR").

Les compositions de l'invention peuvent contenir un seul élastomère diénique vinylaromatique ou un mélange de plusieurs élastomères diéniques vinylaromatiques, le ou les élastomères diéniques vinylaromatiques, toujours majoritaires, pouvant être utilisés en association avec d'autres élastomères connus de l'homme de l'art tels que par exemple, un caoutchouc naturel (NR) ou un polybutadiène (BR).

Le taux d'élastomère diénique vinylaromatique est compris dans un domaine allant de 70 à 100 pce, plus préférentiellement de 85 à 100 pce et très préférentiellement ce taux est de 100 pce, c'est-à-dire qu'il n'y a que des élastomères diéniques vinylaromatiques dans la composition.

### II.2. Charge renforçante

On peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Degussa, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m2/g, plus préférentiellement comprise entre 60 et 300 m2/g.

De manière préférentielle, le taux de charge renforçante totale (noir de carbone et/ou charge inorganique renforçante telle que silice) est compris entre 20 et 200 pce, plus préférentiellement entre 30 et 160 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un premier mode de réalisation préférentiel de l'invention, on utilise le noir de carbone comme charge renforçante majoritaire entre 60 et 160 pce, plus préférentiellement entre 70 et 150 pce.

Selon un autre mode de réalisation préférentiel de l'invention, on utilise la silice comme charge renforçante majoritaire entre 60 et 160 pce, plus préférentiellement entre 70 et 150 pce, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 5 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale suivante:

Z - A - Sx - A - Z ,

dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 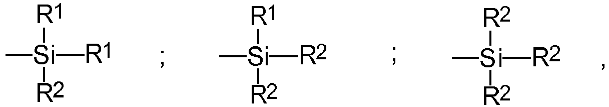 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R2 = OH dans la formule ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 16 pce, plus préférentiellement entre 5 et 15 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.3. Résine PPE

La composition selon l'invention comprend une résine polyphénylène éther (en abrégé « résine PPE »). Ce type de composé est décrit par exemple dans l'encyclopédie « Ullmann's encyclopédia of industrial chemistry » éditée par VCH, vol A 21, pages 605-614, 5e édition,1992.

De manière connue, les résines PPE ont habituellement des masses moléculaires moyennes en nombre (Mn) variables, le plus souvent de 15000 à 30000 g/mol, dans le cas des hautes masses comme celles-ci, la Mn est mesurée de manière connue de l'homme de l'art par SEC (encore nommée GPC, comme dans la référence US4588806, colonne 8).

Pour les besoins de l'invention, on utilise pour la composition de l'invention une résine PPE possédant une masse Mn inférieure aux masses régulièrement rencontrées et notamment comprise dans un domaine allant de 800 à 1500 g/mol, de préférence de 800 à 1300 g/mol et en particulier une Mn comprise dans un domaine variant de 800 à 1100 g/mol. Les masses moléculaires sont mesurées selon la méthode décrite plus haut.

Plusieurs types de structure peuvent correspondre aux résines PPE, selon l'enchainement des monomères. Par exemple, on peut avoir des structures de type A ou B.

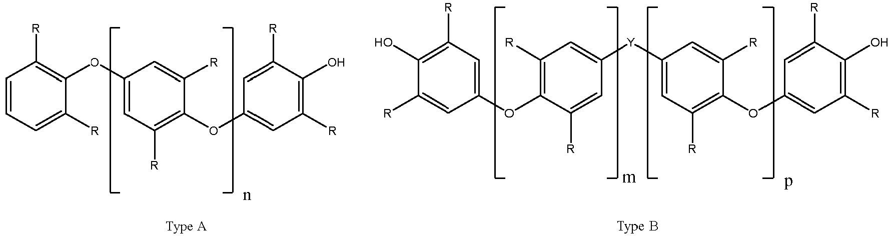

Les formules de type A et B sont des exemples et d'autres structures de résines PPE sont possibles. Les formules de type A et B existent dans le commerce et par exemple, la résine « Noryl SA 120 ^{»} (Mn=3300 g/mol selon la méthode décrite plus haut), ou la résine « Noryl SA 90 ^{»} (Mn=2300 g/mol selon la méthode décrite plus haut) de la société SABIC Innovative Plastics respectivement.

### Préparation de résines PPE de masse moléculaire comprise dans un domaine allant de 800 à 1500 g/mol

Des résines PPE de type A et B présentant une faible masse moléculaire peuvent être obtenues en partant des résines PPE commerciales de plus haute masse moléculaire, telles que « Noryl SA 120 » et « Noryl SA90 » par une extraction sélective des basses masses moléculaires contenues dans ces produits. Cette extraction sélective a été effectuée grâce à une solubilisation préalable dans un bon solvant des produits et suivie d'une précipitation contrôlée par l'ajout d'un mauvais solvant.

### Préparation de la résine PPE de type A de masse moléculaire de 950 g/mol (Notée Résine A1) :

1kg de résine PPE « Noryl SA120 » est mélangé à 3kg de toluène à 60°C. On agite jusqu'à solubilisation totale de la résine PPE. On ajoute alors 20kg de méthanol et on agite pendant 30 minutes pour homogénéisation. On laisse librement refroidir la suspension jusqu'à température ambiante et on sépare par décantation le précipité du surnageant. Le surnageant est débarrassé de ses solvants par évaporation. On récupère 0,12kg d'une poudre jaune-vert. La résine A1 est une résine PPE de formule générale (I), de type A, dans laquelle les groupements R sont des radicaux méthyles et n=8.

### Préparation de la résine PPE de type B de masse moléculaire de 950 g/mol (Notée Résine B1) :

1kg de résine PPE « Noryl SA90 » est mélangé à 3kg de toluène à 60°C. On agite jusqu'à solubilisation totale de la résine PPE. On ajoute alors 42,8kg de méthanol et on agite pendant 30 minutes pour homogénéisation. On laisse librement refroidir la suspension jusqu'à température ambiante et on sépare par décantation le précipité du surnageant. Le surnageant est débarrassé de ses solvants par évaporation. On récupère 0,3kg d'une poudre jaune. La résine B1 est une résine PPE de formule générale différente de la formule générale (I), de type B, dans laquelle le groupement Y est un diméthyleméthylène, les groupements R sont des radicaux méthyles et m+p=5.

Pour les besoins de l'invention, la résine présente la formule générale (I), de type A: 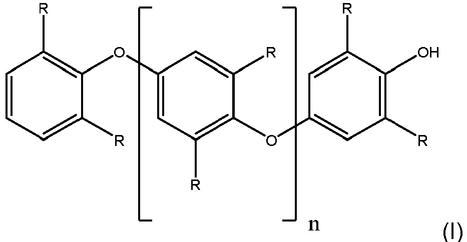 dans laquelle :
- les groupements R représentent indépendamment les uns des autres un atome d'hydrogène ou un radical alkyle ; de préférence les groupements R représentent tous un atome d'hydrogène ou tous un radical alkyle (préférentiellement méthyle, éthyle, propyle ou butyle), et plus préférentiellement, les groupements R représentent un radical méthyle.
- n est compris entre 6 et 12, de préférence entre 7 et 10.

Préférentiellement, la valeur de l'indice de polydispersité Ip (rappel : Ip = Mw/Mn avec Mw masse moléculaire moyenne en poids et Mn masse moléculaire moyenne en nombre) de la résine PPE est inférieure ou égale à 5, plus préférentiellement inférieure ou égale à 3 et plus préférentiellement encore inférieure ou égale à 2.

La résine PPE utile aux besoins de l'invention présente préférentiellement une température de transition vitreuse (Tg), mesurée par DSC selon la norme ASTM D3418 de 1999 comprise dans un domaine allant de 0 à 130°C, de préférence de 5 à 115°C et plus préférentiellement de 5 à 100°C..

Le taux de résine PPE dans la composition est préférentiellement compris dans un domaine allant de 1 à 90 pce, plus préférentiellement de 2 à 80 pce, plus préférentiellement encore de 3 à 60 pce et très préférentiellement de 5 à 60 pce.

### II.4. Système de réticulation

Le système de réticulation peut être un système de vulcanisation, il est préférentiellement à base de soufre ou de donneurs de soufre et d'accélérateur primaire de vulcanisation (préférentiellement 0,5 à 10,0 pce d'accélérateur primaire). A ce système de vulcanisation viennent optionnellement s'ajouter, divers accélérateurs secondaires et/ou activateurs de vulcanisation connus tels qu'oxyde de zinc (préférentiellement pour 0,5 à 10,0 pce), acide stéarique ou autres. Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### II.5. Additifs divers

Les compositions de caoutchouc des bandes de roulement conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des résines renforçantes ou des agents plastifiants. De préférence cet agent plastifiant est une résine hydrocarbonée solide autre que la résine précédemment décrite (ou résine plastifiante), une huile d'extension (ou huile plastifiante), ou un mélange des deux.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### 11.6. Préparation des compositions de caoutchouc

Les compositions utilisées dans les bandes de roulement de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- Incorporer aux élastomères, notamment à l'élastomère diénique vinylaromatique, au cours d'une première étape (dite "non-productive"), la charge renforçante, la résine PPE et les éventuels autres ingrédients de la composition à l'exception du système de réticulation, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (les élastomères, la charge renforçante, la résine PPE et autres), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min. Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'un pneumatique.

L'invention concerne les pneumatiques et les produits semi-finis pour pneumatiques précédemment décrits, les articles de caoutchouc tant à l'état cru (c'est à dire, avant cuisson) qu'à l'état cuit (c'est à dire, après réticulation ou vulcanisation).

### II.7. Pneumatique de l'invention

La composition de caoutchouc selon l'invention peut être utilisée dans différentes parties du pneumatique, notamment dans le sommet, la carcasse, la zone du bourrelet, la zone du flanc et la bande de roulement (incluant notamment la sous-couche de la bande de roulement).

Selon un mode préférentiel de réalisation de l'invention, la composition de caoutchouc précédemment décrite peut être utilisée dans le pneumatique comme une couche élastomère rigide dans au moins une partie du pneumatique.

Par « couche » élastomère, on entend tout élément tridimensionnel, en composition de caoutchouc (ou « élastomère », les deux étant considérés comme synonymes), de forme et d'épaisseur quelconques, notamment feuille, bande, ou autre élément de section droite quelconque, par exemple rectangulaire ou triangulaire.

Tout d'abord, la couche élastomère peut être utilisée en sous couche de bande de roulement disposée dans le sommet du pneumatique, entre d'une part la bande de roulement, i.e., la portion destinée à entrer au contact de la route lors du roulage, et d'autre part la ceinture renforçant ledit sommet. L'épaisseur de cette couche élastomère est de préférence comprise dans un domaine allant de 0,5 à 10 mm, notamment dans un domaine de 1 à 5 mm.

Selon un autre mode préférentiel de réalisation de l'invention, la composition de caoutchouc selon l'invention peut être utilisée pour former une couche élastomère, disposée dans la région de la zone du bourrelet du pneumatique, radialement entre la nappe carcasse, la tringle et le retournement de la nappe carcasse.

Un autre mode préférentiel de réalisation de l'invention peut être l'utilisation de la composition selon l'invention pour former une couche élastomère disposée dans la zone du flanc du pneumatique.

Alternativement, la composition de l'invention peut avantageusement être utilisée dans la bande roulement du pneumatique.

### III. EXEMPLES DE REALISATION DE L'INVENTION

### III.1. Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique vinylaromatique, la charge renforçante et la résine PPE, ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 180°C.

On récupère le mélange ainsi obtenu, on le refroidit puis on incorpore du soufre, un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'un profilé.

### III.2. Essais de compositions de caoutchouc

Cet essai illustre des compositions de caoutchouc utilisées dans des bandes de roulement de pneumatiques. Ces compositions permettent d'augmenter la Tg du mélange. Pour cela, des compositions de caoutchouc ont été préparées comme indiqué précédemment.

La composition C1 ci-dessous ne comprend pas de résine PPE. Les compositions témoins C2, C3 et C4 comprennent des résines PPE non conformes à la présente invention. La composition C5 est conforme à l'invention. Les formulations (en pce ou parties en poids pour cent parties d'élastomère) et leurs propriétés mécaniques ont été résumées dans les tableaux 1 et 2 ci-dessous.

**Tableau 1**

| Composition | C1 | C2 | C3 | C4 | C5 |
|---|---|---|---|---|---|
| SBR (1) | 100 | 100 | 100 | 100 | 100 |
| Silice (2) | 70 | 85 | 85 | 85 | 85 |
| Silane (3) | 5 | 7 | 7 | 7 | 7 |
| Résine PPE 1 (4) | - | 25 | - | - | - |
| Résine PPE 2 (5) | - | - | 25 | - | - |
| Résine PPE 3 (6) | - | - | - | 25 | - |
| Résine PPE 4 (7) | - | - | - | - | 25 |
| DPG (8) | 1 | 1,5 | 1,5 | 1,5 | 1,5 |
| ZnO (9) | 3 | 3 | 3 | 3 | 3 |
| Acide stéarique (10) | 2 | 2 | 2 | 2 | 2 |
| 6PPD (11) | 2 | 2 | 2 | 2 | 2 |
| Soufre | 1 | 1 | 1 | 1 | 1 |
| CBS (12) | 2,5 | 2,5 | 2,5 | 2,5 | 2,5 |

| | | | | | |
|---|---|---|---|---|---|
| (1) SBR avec 15% de motif styrène et 24% de motif 1,2 de la partie butadiénique (Tg mesurée par DSC selon la norme ASTM D3418 de 1999 de ―65°C) ; (2) Silice « Zeosil1165MP » de la société Solvay de surface BET 160m²/g ; (3) Agent de couplage TESPT : « SI69 » de la société Evonik ; (4) Résine PPE 1 : Poly(2,6-diméthyl-1,4-phénylène éther) « Noryl SA120 » de la société Sabic, Mn = 3300 g/mol ; (5) Résine PPE 2 : Poly(2,6-diméthyl-1,4-phénylène éther) « Noryl SA90 » de la société Sabic, Mn = 2350 g/mol ; (6) Résine PPE 3: résine PPE B1 obtenue selon le mode opératoire décrit plus haut de Mn = 950g/mol ; (7) Résine PPE 4 : résine PPE A1 obtenue selon le mode opératoire décrit plus haut de Mn = 950 g/mol ; (8) Diphénylguanidine : « Perkacit DPG » de la société Flexsys ; (9) Oxyde de zinc (grade industriel ― société Umicore) ; (10) Stéarine (« Pristerene 4931 » de la société Uniquema) ; (11) N-1,3-diméthylbutyl-N-phénylparaphénylènediamine Santoflex 6-PPD de la société Flexsys; (12) N-cyclohexyl-benzothiazyl sulphénamide (Santocure CBS de la société Flexsys). | | | | | |

**Tableau 2**

| Composition | C1 | C2 | C3 | C4 | C5 |
|---|---|---|---|---|---|
| Tg (°C) | -55 | -54 | -51 | -51 | -47 |

On note que les compositions C2 et C3 présentent des températures de transition vitreuse proches et supérieures à celle de la composition C1 exempte de plastifiant de haute Tg. Dans la composition C4, on observe que le passage à une Mn plus faible d'une résine PPE de type B modifie peu son aptitude à modifier la Tg du mélange. En revanche et de manière surprenante on constate dans C5 que pour la résine PPE de type A une diminution de la Mn conduit à une augmentation bien plus accrue de la Tg du mélange. On a constaté également de manière surprenante que la composition C5 conforme à l'invention présente une Tg bien plus élevée que la composition C4 alors que les résines PPE contenues dans ces compositions ont une masse moléculaire comparable.

## Revendications

1. Composition de caoutchouc à base d'au moins un élastomère diénique vinylaromatique majoritaire, une charge renforçante, un système de réticulation, une résine polyphénylène éther présentant une masse moléculaire moyenne en nombre (Mn) comprise dans un domaine allant de 800 à 1500 g/mol et de formule générale (I) 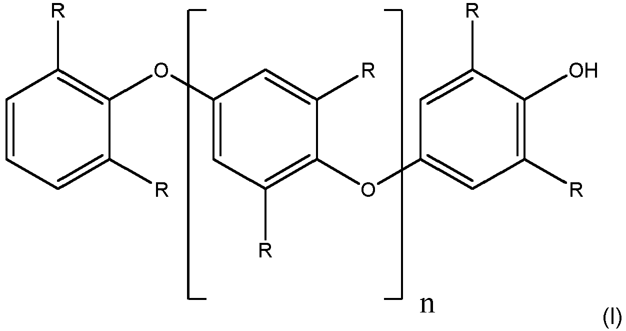 dans laquelle les groupements R représentent indépendamment les uns des autres un atome d'hydrogène ou un radical alkyle, et n est compris entre 6 et 12.

2. Composition selon la revendication 1 dans laquelle l'élastomère diénique vinylaromatique présente un taux de vinylaromatique supérieur à 10%.

3. Composition selon l'une quelconque des revendications précédentes, dans laquelle l'élastomère diénique vinylaromatique est choisi dans le groupe constitué par les copolymères de butadiène et de styrène, les copolymères d'isoprène et de styrène, les copolymères de butadiène, d'isoprène et de styrène et les mélanges de ces élastomères, et de préférence dans le groupe constitué par les copolymères de butadiène et de styrène et le mélanges de ces derniers.

4. Composition selon l'une quelconque des revendications précédentes, dans laquelle le taux d'élastomère diénique vinylaromatique est compris dans un domaine allant de 70 à 100 pce (parties en poids pour cent parties d'élastomère), de préférence de 85 à 100 pce.

5. Composition selon l'une quelconque des revendications précédentes, dans laquelle la résine polyphénylène éther présente une température de transition vitreuse (Tg), mesurée par DSC selon la norme ASTM D3418 de 1999, comprise dans un domaine allant de 0 à 130°C, de préférence de 5 à 115°C.

6. Composition selon l'une quelconque des revendications précédentes, dans laquelle la résine polyphénylène éther présente la formule générale (I) dans laquelle les groupements R représentent tous un atome d'hydrogène ou tous un radical alkyle identique.

7. Composition selon l'une quelconque des revendications précédentes, dans laquelle les groupements R représentent un radical méthyle.

8. Composition selon l'une quelconque des revendications précédentes, dans laquelle n est compris entre 7 et 10.

9. Composition selon l'une quelconque des revendications précédentes dans laquelle le taux de ladite résine polyphénylène éther est compris dans un domaine allant de 1 à 90 pce, de préférence de 2 à 80 pce.

10. Composition selon l'une quelconque des revendications 1 à 9, dans laquelle la charge renforçante comporte du noir de carbone et/ou de la silice.

11. Composition selon l'une quelconque des revendications 1 à 10, dans laquelle la charge renforçante représente entre 20 et 200 pce, plus préférentiellement entre 30 et 160 pce.

12. Composition selon l'une quelconque des revendications 1 à 11, dans laquelle la charge renforçante comporte majoritairement du noir de carbone.

13. Composition de caoutchouc selon l'une quelconque des revendications 1 à 11, dans laquelle la charge renforçante comporte majoritairement de la silice.

14. Article de caoutchouc fini ou semi-fini comportant une composition de caoutchouc selon l'une quelconque des revendications 1 à 13.

15. Pneumatique comportant une composition de caoutchouc selon l'une quelconque des revendications 1 à 13.

## Patentansprüche

1. Kautschukzusammensetzung auf Basis von mindestens einem mehrheitlichen Dien-Vinylaromat-Elastomer, einem verstärkenden Füllstoff, einem Vernetzungssystem, einem Polyphenylenetherharz mit einer zahlenmittleren Molmasse (Mn) in einem Bereich von 800 bis 1500 g/mol und der allgemeinen Formel (I): 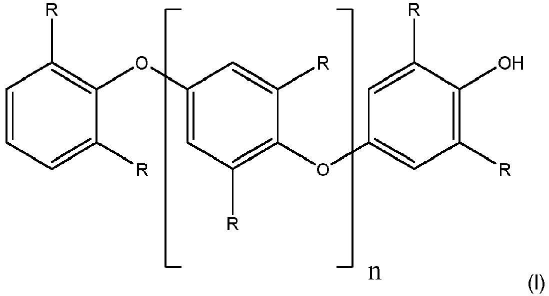 wobei die Gruppen R unabhängig voneinander für ein Wasserstoffatom oder einen Alkylrest stehen und n zwischen 6 und 12 liegt.

2. Zusammensetzung nach Anspruch 1, wobei das Dien-Vinylaromat-Elastomer einen Vinylaromatengehalt von mehr als 10 % aufweist.

3. Zusammensetzung nach einem der vorhergehenden Ansprüche, wobei das Dien-Vinylaromat-Elastomer aus der Gruppe bestehend aus Copolymeren von Butadien und Styrol, Copolymeren von Isopren und Styrol, Copolymeren von Butadien, Isopren und Styrol und Mischungen dieser Elastomere und vorzugsweise aus der Gruppe bestehend aus Copolymeren von Butadien und Styrol und Mischungen Letzterer ausgewählt ist.

4. Zusammensetzung nach einem der vorhergehenden Ansprüche, wobei der Gehalt an Dien-Vinylaromat-Elastomer in einem Bereich von 70 bis 100 phe (Gewichtsteile pro hundert Teile Elastomer), vorzugsweise von 85 bis 100 phe, liegt.

5. Zusammensetzung nach einem der vorhergehenden Ansprüche, wobei das Polyphenylenetherharz eine durch DSC gemäß der ASTM-Norm D3418 von 1999 gemessene Glasübergangstemperatur (Tg) in einem Bereich von 0 bis 130 °C, vorzugsweise von 5 bis 115 °C, aufweist.

6. Zusammensetzung nach einem der vorhergehenden Ansprüche, wobei das Polyphenylenetherharz die allgemeine Formel (I) aufweist, in der die Gruppen R alle für ein Wasserstoffatom oder alle für einen identischen Alkylrest stehen.

7. Zusammensetzung nach einem der vorhergehenden Ansprüche, wobei die Gruppen R für einen Methylrest stehen.

8. Zusammensetzung nach einem der vorhergehenden Ansprüche, wobei n zwischen 7 und 10 liegt.

9. Zusammensetzung nach einem der vorhergehenden Ansprüche, wobei der Gehalt an Polyphenylenetherharz in einem Bereich von 1 bis 90 phe, vorzugsweise von 2 bis 80 phe, liegt.

10. Zusammensetzung nach einem der Ansprüche 1 bis 9, wobei der verstärkende Füllstoff Ruß und/oder Kieselsäure umfasst.

11. Zusammensetzung nach einem der Ansprüche 1 bis 10, wobei der verstärkende Füllstoff zwischen 20 und 200 phe, weiter bevorzugt zwischen 30 und 160 phe, ausmacht.

12. Zusammensetzung nach einem der Ansprüche 1 bis 11, wobei der verstärkende Füllstoff mehrheitlich Ruß umfasst.

13. Kautschukzusammensetzung nach einem der Ansprüche 1 bis 11, wobei der verstärkende Füllstoff mehrheitlich Kieselsäure umfasst.

14. Kautschuk-Fertigteil oder -Halbzeug, umfassend eine Kautschukzusammensetzung nach einem der Ansprüche 1 bis 13.

15. Reifen, umfassend eine Kautschukzusammensetzung nach einem der Ansprüche 1 bis 13.

## Claims

1. Rubber composition based on at least one predominant vinylaromatic diene elastomer, a reinforcing filler, a crosslinking system, and a polyphenylene ether resin which has a number-average molecular mass (Mn) within a range from 800 to 1500 g/mol and a general formula (I) 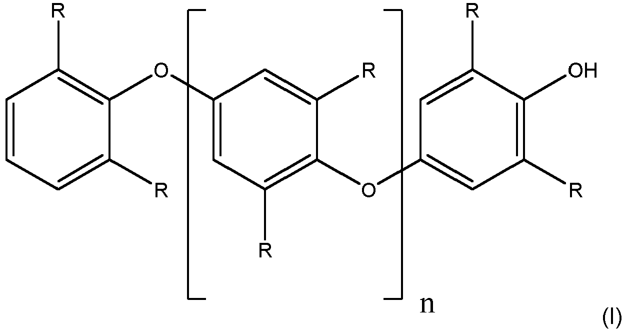 in which the groups R independently of one another represent a hydrogen atom or an alkyl radical and n is between 6 and 12.

2. Composition according to any one of Claims 1 to 3, wherein the vinylaromatic diene elastomer has a vinylaromatic content of more than 10%.

3. Composition according to any one of the preceding claims, wherein the vinylaromatic diene elastomer is selected from the group consisting of copolymers of butadiene and styrene, copolymers of isoprene and styrene, copolymers of butadiene, isoprene and styrene, and mixtures of these elastomers, and preferably from the group consisting of copolymers of butadiene and styrene and mixtures of the latter.

4. Composition according to any one of the preceding claims, wherein the vinylaromatic diene elastomer content is within a range from 70 to 100 phr (parts by weight per hundred parts of an elastomer), preferably from 85 to 100 phr.

5. Composition according to any one of the preceding claims, wherein the polyphenylene ether resin has a glass transition temperature (Tg), measured by DSC according to standard ASTM D3418 from 1999, within a range from 0 to 130°C, preferably from 5 to 115°C.

6. Composition according to any one of the preceding claims, wherein the polyphenylene ether resin has the general formula (I) in which the groups R all represent a hydrogen atom or all represent an identical alkyl radical.

7. Composition according to any one of the preceding claims, wherein the groups R represent a methyl radical.

8. Composition according to any one of the preceding claims, wherein n is between 7 and 10.

9. Composition according to any one of the preceding claims, wherein the content of said polyphenylene ether resin is within a range from 1 to 90 phr, preferably 2 to 80 phr.

10. Composition according to any one of Claims 1 to 9, wherein the reinforcing filler comprises carbon black and/or silica.

11. Composition according to any one of Claims 1 to 10, wherein the reinforcing filler represents between 20 and 200 phr, more preferably between 30 and 160 phr.

12. Composition according to any one of Claims 1 to 11, wherein the reinforcing filler comprises predominantly carbon black.

13. Rubber composition according to any one of Claims 1 to 11, wherein the reinforcing filler comprises predominantly silica.

14. Finished or semi-finished rubber article comprising a rubber composition according to any one of Claims 1 to 13.

15. Tyre comprising a rubber composition according to any one of Claims 1 to 13.
